# EUROPÄISCHE PATENTANMELDUNG

(11) **EP 1 359 721 A1**
(43) Veröffentlichungstag der Anmeldung: **05.11.2003**
(21) Anmeldenummer: 02009762.2
(22) Anmeldetag: 30.04.2002
(51) Int. Cl.: H04L 29/06, H04L 29/12

(54) **Verfahren und Vorrichtung zum Übertragen von Datenpaketen in einem Kommunikationssystem**

(71) Anmelder: SIEMENS AKTIENGESELLSCHAFT, 80333 München (DE)
(72) Erfinder: Lott, Matthias, 81477 München (DE); Wegmann, Bernhard, 83607 Holzkirchen (DE)

(57) **Zusammenfassung**

Die Erfindung bezieht sich auf ein Verfahren zum Übertragen von Datenpaketen (PDUs) in einem Kommunikationssystem (H/2) mit zumindest einer Schnittstelle (V) zwischen einer senderseitigen Station (AP; AP2) und einer empfängerseitigen Station (MT, MT2; MT3), bei dem (a) die Datenpakete (PDU) mit einem Kopfabschnitt, welcher Quellen- und Zieladressenangaben enthält, übertragen werden.

Zum Ressourcen schonenden Übertragen wird vorgeschlagen, (b) die Datenpakete über zumindest die Schnittstelle (V) mit einem Kopfabschnitt mit einer Mediumzugangs-Identifizierungsinformation (MAC-ID (MT), MAC-ID (MT3)) anstelle der Quellen- und Zieladressenangaben zu übertragen.

## Beschreibung

Die Erfindung bezieht sich auf ein Verfahren zum Übertragen von Datenpaketen in einem Kommunikationssystem mit den oberbegrifflichen Merkmalen des Patentanspruchs 1 und eine Vorrichtung bzw. ein Kommunikationssystem zum Durchführen eines solchen Verfahrens.

Gegenwärtig findet in Kommunikationssystemen wegen der schnellen Entwicklung des Internets und des damit verbundenen Internetprotokolls (IP) ein Wandel von der leitungsgebunden, verbindungsorientierten zur verbindungslosen, paketorientierten Vermittelung statt. Durch die Einführung von Dienstgütekriterien (QoS) im Internetprotokoll, wie z.B. für sogenannte Integrated Services, werden mehr und mehr auch klassische leitungsgebundene Echtzeitdienste, wie Sprachübertragung durch paketorientierte Dienste ersetzt, was als "voice over IP" bezeichnet wird. Dieser Trend setzt sich bis zu den funkgestützten lokalen Datennetzen (Wireless LANs) und den zellularen Mobilfunknetzen fort. So wurde in dem europäischen Forschungsprojekt BRAIN (Broadband Radio Access of IP based Networks) die Vision verfolgt, dass zukünftig nur noch ein mit QoS versehenes IP-Kernnetz mit unterschiedlichen Funkzugangsnetzen (RANs - Radio Access Networks) existieren wird und alle Anwendungen als Ende-zu-Ende-Übertragung auf dem Internetprotokoll basieren werden.

Derzeit ist jedes IP-Paket unabhängig von der Größe mit einem 40 Byte großen Kopfabschnitt (Header) mit 20 Byte IP-Basisinformation, 8 Byte UDP (User Datagram Protocol) und 12 Byte RTP (Real-Time Transport Protocol) versehen, was bei kleinen Sprachpaketen mit z.B. nur ungefähr 16 Byte, die der Encoder alle 20ms aussendet, eine sehr große Überbelastung (Overhead) bedeutet. Bei IPv6 ist die IP-Basisinformation sogar 40 Byte lang, was insgesamt 60 Byte als Kopfabschnittgröße ausmacht.

Insbesondere bei HiperLAN/2 (H/2), mit einem verbindungsorientierten Konzept, wäre eine Kompression der Datenmenge vorteilhaft.

Herkömmliche Verfahren zur Datenkompression, wie die robuste Kopfabschnitts-Kompression (ROHC - Robust Header Compression),die gegenwärtig bei der IETF (Internet Engineering Task Force) entwickelt werden, berücksichtigen lediglich den Inhalt des IP-Kopfabschnitts und lassen die darunter liegende Übertragungs- und Kontrollschicht völlig außer Acht. Diesen Vorteil, dass das Verfahren unabhängig vom Übertragungsmedium ist, erkauft man sich aber mitunter durch mangelnde Effizienz.

Aus der Historie von IP wird als Schicht-2-Protokoll Ethernet vorgesehen. Dabei wird eine Station (auch Node oder Host genannt) auf Schicht 2 durch eine 48 Bit große Ethernet-Adresse eindeutig identifiziert. Einem IP-Paket wird zusätzlich eine Ethernet Quell-(Source)- und Ziel-(Destination)- Adresse auf Schicht 2 hinzugefügt, damit innerhalb eines Subnetzes (IP-Domain) direkt zwischen Stationen auf Schicht 2 kommuniziert werden kann.

Die IP Schicht erwartet daher von der darunter liegenden Schicht 2 eine eindeutige, sogenannte L2-Adresse, über die eine Station innerhalb eines Subnetzes identifiziert und somit adressiert werden kann. Ist der sendenden Station nur die IP-Adresse der Zielstation bekannt, nicht aber die L2-Adresse, wird eine Adressauflösung (ARP: Address Resolution Protocol) durchgeführt. Befindet sich die Zielstation nicht im gleichen Subnetz, wird das Paket vorgabemäßig (default) an die zugehörige Leiteinrichtung (Router) geschickt, die das Paket an das richtige Subnetz weiterleitet (routet). Die IP-Adresse und Ethernet-Adresse der vorgegebenen Leiteinrichtung ist in jedem Fall in der ARP-Tabelle jeder Station enthalten.

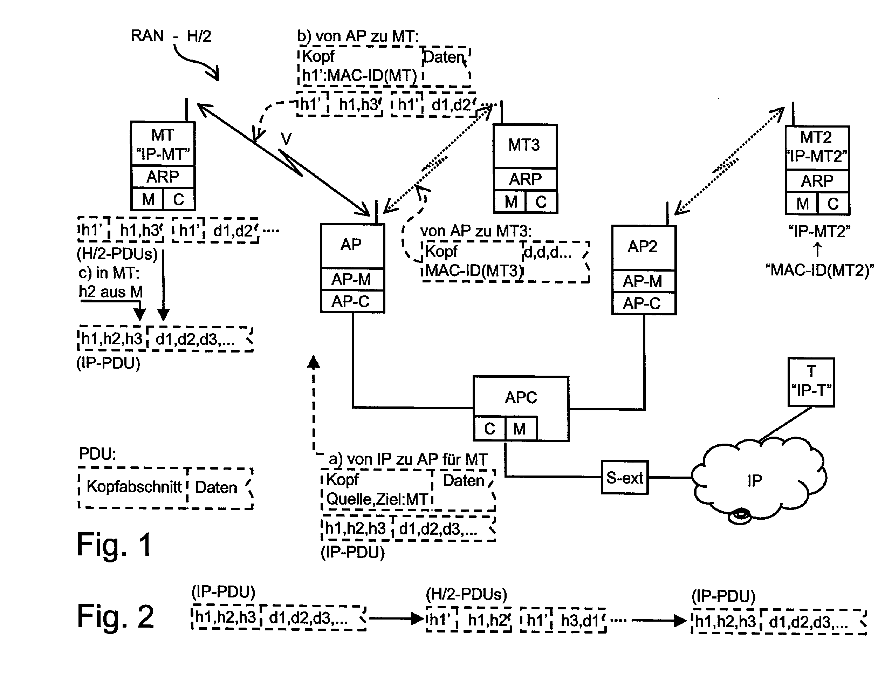

Wie aus Fig. 2 ersichtlich, wird gemäß dem Stand der Technik somit im H/2-Netz ein IP-Datenpaket IP-PDU aus dem Internet empfangen, welches im Kopfabschnitt u.a. eine Zieladresse h2 und eine Absenderadresse h3 aufweist. Im Datenabschnitt befinden sich Nutzdaten d1, d2, d3,... Dieses IP-Datenpaket wird für die Übertragung über die H/2-Funk-Schnittstelle in eine Vielzahl kleinerer Datenpakete H/2-PDUs zerlegt. Dabei weist jedes H/2-Datenpaket im Kopfabschnitt zumindest eine für die verbindungsorientierte Übertragung eindeutige Mediumzugangs-Identifizierungsinformation h1' auf. In den Datenabschnitten werden insgesamt als Daten die gesamten Kopfabschnittsinformationen h1, h2, h3 und die eigentlichen Dateninformationen d1, d2, d3,.... des ursprünglichen IP-Datenpakets übertragen. Empfängerseitig wird daraus schließlich das ursprüngliche IP-Datenpaket rekonstruiert.

Die Aufgabe der Erfindung besteht darin, bei einem Verfahren zum Übertragen von Datenpaketen in einem Kommunikationssystem, insbesondere gemäß HiperLAN/2 (H/2), eine Reduktion des IP-Kopfabschnitts zu ermöglichen.

Diese Aufgabe wird durch ein Verfahren zum Übertragen von Datenpaketen in einem Kommunikationssystem mit den oberbegrifflichen Merkmalen des Patentanspruchs 1, eine Vorrichtung zum Durchführen eines solchen Verfahrens mit den Merkmalen des Patentanspruchs 12 bzw. ein Kommunikationssystem mit den Merkmalen des Patentanspruchs 13 gelöst.

Vorteilhafte Ausgestaltungen sind Gegenstand von abhängigen Ansprüchen.

Gerade bei HiperLAN/2 (H/2), mit einem verbindungsorientierten Konzept, bietet sich im Rahmen des Adressmanagements die Verwendung von Mechanismen an, die nicht nur Kompression im herkömmlichen Sinne, sondern eine Reduktion des IP Headers ermöglichen.

Ein hervorzuhebender Punkt liegt darin, dass im Rahmen von HiperLAN/2 und UTRA (UMTS Terrestrial Radio Access) die Funktionalität "IP Header Compression" in den für das Funkzugangsnetz (RAN: Radio Access Network) spezifischen Teil der Konvergenzschicht (SSCS: Service Specific Convergence Sub layer) integriert wird und die IP-Zieladresse und/oder IP-Quellenadresse durch die Abbildung der Adressen im Adressmanagement nicht übertragen zu werden braucht. Die IP-Adresse der Ziel-/Empfangsstation für die Übertragung wird dabei einer Verbindungs-ID (MAC-ID: Medium Access Control IDentification number), also einer Verbindungs-Identifizierungsinformation, insbesondere Verbindungs-Identifizierungsnummer für eine Zugriffssteuerung auf das Übertragungsmedium eindeutig zugeordnet und muss nicht zusätzlich übertragen werden, da H/2 einen verbindungsorientierten Übertragungsdienst auf Schicht 2 unterstützt.

Vorteilhaft ist somit ein Verfahren zum Übertragen von Datenpaketen in einem Kommunikationssystem auf einer Verbindung über eine Schnittstelle zwischen einer senderseitigen Station und einer empfängerseitigen Station, bei dem erste Datenpakete einen Kopfabschnitt, welcher Adressenangaben enthält, aufweisen und für die Übertragung über zumindest die Schnittstelle zu zweiten Datenpaketen, die einen Verbindungsspezifischen Kopfabschnitt mit einer Verbindungs-abhängigen Identifizierungsinformation aufweisen, umgesetzt werden, wobei senderseitig zur Kopfabschnittskomprimierung bei der Umsetzung in die zweiten Datenpakete die Adressenangaben zumindest teilweise weggelassen werden, wobei der empfängerseitigen Station eine Information zur Verfügung gestellt wird, welche die Rekonstruktion der weggelassenen Adressenangaben ermöglicht.

Dabei wird unter einem Datenpaket eine beliebige Form von Datagrammen und Datenpaketen verstanden, die einen Kopfabschnitt und einen Datenabschnitt aufweisen.

Unter senderseitig wird dabei insbesondere netzseitig verstanden und unter empfängerseitig teilnehmerseitig. Bei umgekehrter Senderichtung, z. B. für die zugeordneten Nachrichten oder für andere Datenpakete, ist die Zuordnung natürlich entsprechend umzukehren. Empfängerseitig wird somit das Weggelassen der Adressenangaben erkannt, wobei die weggelassenen Adressenangaben dort zuordnungsbar bekannt sind.

Die weggelassenen Adressenangaben werden dazu zweckmäßigerweise derart an die darunterliegende Schicht des Senders gereicht werden, dass eine Zuordnung zu einer eindeutigen Adresse, z.B. in Form des komprimierten Kopfabschnitts, auf dieser Schicht durchgeführt werden kann.

Die weggelassenen Adressenangaben können vorteilhafterweise aufgrund einer verbindungsorientierten Übertragung über die Schnittstelle für die Dauer der Verbindung auf eine eindeutige Mediumzugangs-Identifizierungsinformation abgebildet werden, so dass keine speziellen Identifizierungsinformationen eingeführt werden müssen.

Die weggelassenen Adressdaten sind dabei insbesondere Quellen- und/oder Zieladressenangaben. Beispielsweise kann festgelegt werden, dass ein ohne Zieladresse empfangenes Datenpaket für die empfangende Station als Zielstation gedacht ist. Daher kann die Station bei der Rekonstruktion des ursprünglichen Datenpakets für die fehlende Adresse ihre eigene Adresse einsetzen. Entsprechendes gilt z.B. auch für ein empfangenes Datenpaket ohne Absenderangabe, wo die fehlende Angabe dann durch z.B. die Adresse der direkt kommunizierenden Station ersetzt wird.

Die IP-Adresse, insbesondere Absender- und Zieladresse, wird somit aus dem zu übertragenden Paket entfernt. Stattdessen wird ein komprimierter Kopfabschnitt eingefügt. Zudem wird bei Verwendung eines anderen Übertragungsprotokolls eine für dieses typische Umwandlung und insbesondere Segmentierung bzw. Zerstückelung vorgenommen, um die passende Datengröße auf z.B. der DLC-Schicht von H/2 zu erzeugen. Die entfernte Adressinformation wird an die unterliegende Schicht übertragen wird, wo eine eindeutige Zuordnung zu einer Schicht-2 Adresse durchgeführt wird, die dem komprimierten Kopfabschnitt entspricht. Anstatt IP kann auf ein allgemeines Netzprotokoll abgezielt werden.

Die Umsetzung von Adressdaten mit Quellen- und Zieladressenangaben vor der Übertragung über die Schnittstelle in eine Adressangabe in Form einer Mediumzugangs-Identifizierungsinformation ermöglicht die spezielle Anpassung in z.B. nur dem Bereich der Schnittstelle vorzunehmen, so dass ansonsten mit dem üblichen IP-Protokoll gearbeitet werden kann und nur Modifikationen an wenigen Stationen und Protokollen vorzunehmen sind.

Netzseitig und teilnehmerseitig in Tabellen bekannte Quellenund Zieladressangaben zu entsprechenden eindeutigen Mediumzugangs-Identifizierungsinformationen zuzuordnen bietet eine einfache Verwaltungs- und Zugriffsmöglichkeit. Über die Schnittstelle Tabelleninformationen mit verfügbaren Quellenund/oder Zieladressangaben zwischen einer netzseitigen Tabelle und einer teilnehmerseitigen Tabelle vor dem Übertragen solcher Datenpakete auszutauschen, versetzt teilnehmerseitige Stationen schnellst möglich nach dem Einbuchen und/oder zumindest regelmäßig in die Lage, einen Überblick über andere verfügbare Stationen und deren Mediumszugriffs-Identifizierungsinformationen zu gelangen. Der teilnehmerseitigen Station die Mediumzugangs-Identifizierungsinformationen anderer im Datennetz befindlicher Stationen von dem Netz aus mitzuteilen unterstützt dies insbesondere bei Verwendung von Rundfunkkanälen. Als Tabelle eine ARP-Tabelle (ARP: Address Resolution Protocol) mit zumindest bei der Station bekannten IP-Adressen und/oder Ethernet-Adressen zu verwenden, bietet eine diesbezüglich einfache Verwaltung der Adressen.

Die Funktionalität zum Komprimieren des Kopfabschnitts wird vorteilhafterweise in einem für das Funkzugangsnetz spezifischen Teil der Konvergenzschicht angeordnet und durchgeführt, so dass Modifikationen bestehender Systeme nur in geringem Umfang erforderlich sind und eine Kompatibilität zu Einrichtungen erhalten bleibt, die ein solches Verfahren nicht durchführen können.

Mit einem Merker im Datenpaket, insbesondere in dessen Kopfabschnitt zu kennzeichnen, ob der Kopfabschnitt mit einem solchen Verfahren komprimiert wurde, ermöglicht eine einfache empfängerseitige Erkennungsmöglichkeit, wie das empfangene Datenpaket weiter zu verarbeiten ist.

Eine Vorrichtung zum Durchführen eines solchen Verfahrens weist zweckmäßigerweise eine Steuereinrichtung zum Steuern des Betriebsablaufs und Übertragens von Datenpaketen und zumindest eine Speichereinrichtung zum Speichern einer Tabelle auf, wobei in der Tabelle Speicherraum für Adressinformationen mit eindeutig zu Mediumzugangs-Identifizierungsinformationen zugeordneten IP-Quellenund/oder Zieladressangaben bereitgestellt ist.

Bei einem Kommunikationssystem, insbesondere gemäß HiperLAN/2, zum Durchführen eines solchen Verfahrens wird die netzseitige Übertragung von Datenpaketen in netzseitigen und teilnehmerseitigen Stationen somit zumindest in Teilen des Kommunikationssystems mit Datenpaket-Kopfabschnitten gemäß dem Internetprotokoll und zumindest auf der Schnittstelle mit einer Mediumzugriffs-Identifizierungsinformation als eindeutiger Adressangabe durchgeführt.

Ein Ausführungsbeispiel wird nachfolgend anhand der Zeichnung näher erläutert. Es zeigt:
Fig. 1 schematisch Komponenten eines Kommunikationssystems mit darüber kommunizierenden Stationen.

Wie aus Fig. 1 ersichtlich, wird das Verfahren zum Übertragen von Datenpaketen in einem Kommunikationssystem, insbesondere einem Datennetz mit einer Vielzahl von Einrichtungen angewendet. Das Kommunikationssystem besteht dabei aus einem Zugangsnetz RAN, insbesondere gemäß dem Standard HiperLAN/2 bzw. H/2, einem Netzbestandteil oder externen Netz IP, welches gemäß den Vorgaben des Internetprotokolls (IP) betrieben wird, sowie aus teilnehmerseitigen Stationen MT, MT2, MT3, mit welchen von Teilnehmern aus auf das Netz zugegriffen werden kann.

Das eigentliche Funkzugangsnetz RAN (Radio Access Network) besteht aus einem oder mehreren Netzzugangspunkten AP (Access Point), AP2, welche mit einer Zugangspunkt-Steuereinrichtung APC (Access Point Controller) verbunden sind. Sowohl die einzelnen Zugangspunkte AP, AP2 als auch die Zugangspunkt-Steuereinrichtung APC weisen zur Durchführung des Betriebsablaufs und der Übertragung von Datenpaketen als Untereinrichtungen insbesondere Speichereinrichtungen AP-M bzw. M und Steuereinrichtungen AP-C bzw. C auf. Außerdem können Schnittstellen zu weiteren Netzbestandteilen oder externen Netzen bereitgestellt sein, wie beispielsweise die von der Zugangspunkt-Steuereinrichtung APC ausgehende Schnittstelle S-ext, über welche eine Verbindung zu einem anderen Kommunikationssystem aufgebaut werden kann. Im vorliegenden Fall handelt es sich dabei um eine Schnittstelle S-ext zu einem Kommunikationsnetz IP unter Steuerung des Internetprotokolls. Über ein solches externes Kommunikationsnetz IP kann auf diverse Stationen zugegriffen werden, beispielsweise die externe Station T. Natürlich können auch von einem solchen externen Netz aus Zugänge auf das vorliegende Funkzugangsnetz RAN vorgenommen werden.

Zur anschaulichen Beschreibung werden die vorstehend bezeichneten Stationen auch als netzseitige Stationen und Einrichtungen bezeichnet, um eine Unterscheidung zu den teilnehmerseitigen Datenendgeräten vornehmen zu können, welche über die Funkschnittstellen V von den Zugangspunkten AP aus erreichbar sind. Dies erfolgt jedoch ohne eine spezielle Beschränkung auf bestimmte netz- oder teilnehmerseitige Einrichtungen, sondern dient lediglich zur Unterscheidung der einzelnen Bauelemente und Einrichtungen.

Über die Funkschnittstellen V kann eine Kommunikation zu solchen teilnehmerseitigen Stationen, insbesondere Datenendgeräten MT, MT2 und MT3 aufgebaut werden. Solche teilnehmerseitigen Stationen MT, MT2, MT3 weisen wiederum eine Vielzahl von Einrichtungen für deren Betriebsablauf sowie die Übertragung von Daten auf. Zu derartigen Einrichtungen zählen insbesondere Speicher M und Steuereinrichtungen C. Bestandteil eines solchen Speichers M oder eines zusätzlichen Speichers sind dabei insbesondere Speicherbereiche zum Abspeichern von Daten zu Adresstabellen ARP. Sofern nicht bereits, wie bei H/2 IP-Adressen und optional Ethernet-Adressen von der eigenen Station und vorzugsweise einer Leiteinrichtung (Router) abgespeichert sind, können solche Informationen auch mittels einer sogenannten Adressauflösung (ARP) beschafft werden, wie dies für sich bekannt ist.

Die Übertragung von Daten erfolgt in einem solchen Kommunikationssystem üblicherweise über verschiedene Protokollschichten wie z.B. Steuer-, Transport- oder Vermittlungsschicht. Für die Übertragung in der darunterliegenden physikalischen Schicht werden die zu übertragenden Datagramme bzw. Datenpakete IP-PDU zu kleineren Protokolldateneinheiten H/2-PDUs (Packed Data Units) zerstückelt. Die Nachrichtenköpfe bzw.

Kopfabschnitte der Protokolldateneinheiten PDU werden von der Partnerinstanz zur Durchführung des Protokolls verwendet. Das Internetprotokoll IP zählt zur Vermittlungsschicht und stellt im Kopfabschnitt insbesondere eine Quellenadresse h3 der die Daten ursprünglich bereitstellenden Station und eine Zieladresse h2 der die Daten letztendlich empfangenden Station MT zur Verfügung. Beispielhafte Datenpakete sind in Fig. 1 schematisch mit wörtlicher Angabe der Adressen bzw. mit Angabe von Buchstaben in zwei verschiedenen Formen dargestellt.

Betrachtet wird somit beispielhaft ein Funkzugangsnetz RAN (Radio Access Network), insbesondere gemäß dem Standard HiperLAN/2 bzw. H/2 mit mehreren physikalischen und/oder logischen Schichten für die Verwaltung der Systemkomponenten und die Übertragung von Datenpaketen und mit einer Vielzahl von Einrichtungen, die hier zur Vereinfachung nur teilweise skizziert sind.

Bei dem verbindungsorientierten HiperLAN/2 System werden die über das Netz insbesondere aus dem Internet IP ankommenden Pakete (a), insbesondere IP-Datenpakete IP-PDU, in einer sogenannten Konvergenzschicht in entsprechende H/2-Protokolldateneinheiten H/2-PDUs segmentiert (b). Diese segmentierten Protokolldateneinheiten H/2-PDUs sind bei H/2 sogenannte Datenverbindungs-Steuer-(Data Link Control)-Protokolldateneinheiten DLC PDUs. Die Protokolldateneinheiten DLC H/2-PDUs werden dann über die Verbindung V zur teilnehmerseitigen Station MT übertragen, der eine eindeutige Mediumzugangs-Identifizierungsinformation bzw. Mediumzugangs-Identifizierungsnummer MAC-ID bzw. h1' als Adresse zugewiesen ist.

Im Gegensatz zu Ethernet, wo es sich um ein gemeinsam genutztes Medium (shared medium) handelt, werden in H/2 die teilnehmerseitigen Stationen MT, MT2 bzw. Mobilstationen auf Schicht 2 über die Mediumzugangs-Identifizierungsnummer MAC-ID bzw. h1' eindeutig adressiert. Eine Zuweisung einer IP-Adresse auf die Mediumzugangs-Identifizierungsnummer MAC-ID kann in der Konvergenzschicht 1 stattfinden. Diese Zuordnung wird dabei vorzugsweise in der Schnittstelle vorgenommen, in welcher die Daten segmentiert werden. Bei von einem externen Netz IP eintreffenden Daten IP-PDU erfolgt dies in dem Zugangspunkt AP vor dem Versand über die Schnittstelle V zur teilnehmerseitigen Station MT oder alternativ in der Schnittstelle S-ext zum externen Netz IP oder einer Einrichtung APC dazwischen.

Die umgekehrte Adress-Zuweisung, d.h. bei einer Übertragung von Paketen von der teilnehmerseitigen Station MT zum Zugangspunkt AP, erfolgt z.B. in der Form MAC-ID@IP-Adresse. Dabei ist die Assemblierung eines IP-Pakets aus den Paketdateneinheiten DLC PDUs leicht machbar, wenn die zugehörige IP-Adresse (IP-T bzw. IP-MT2) der z.B. über das Internet IP zu erreichenden Zielstation T oder einer anderen Station MT2 im selben Netz bei dem Verbindungsaufbau mitgeteilt und einer eindeutigen Mediumzugangs-Identifizierungsnummer MAC-ID zugewiesen wurde. Da die Mediumzugangs-Identifizierungsnummer MAC-ID eindeutig ist, kann diese Zuweisung durchgeführt werden. Bei in der teilnehmerseitigen Station MT erzeugten Daten erfolgen die Segmentierung und die Zuordnung einer eindeutigen Ziel-Mediumzugangs-Identifizierungsnummer MAC-ID(MT2) zweckmäßigerweise in dieser Station MT.

Während der Anmeldung einer Station MT bei einem Zugangspunkt AP im Zugangsnetz H/2 wird darin neben dem Wunsch auf Zuweisung einer Mediumzugangs-Identifizierungsnummer MAC-ID gleichzeitig die zugehörige IP-Adresse übertragen, über welche die Station MT erreichbar ist. Der Zugangspunkt AP speichert nun in einem Speicher AP-M neben der IP-Adresse auch die Mediumzugangs-Identifizierungsnummer MAC-ID in einer Tabelle ab.

Empfängt nun der Zugangspunkt AP Pakete IP-PDU, die an die teilnehmerseitige Station MT adressiert sind, kann die Zieladresse h2 aus dem IP-Kopfabschnitt auf der Konvergenzschicht entfernt werden (a zu b). Der Empfänger, d.h. die teilnehmerseitige Station MT, wird auf Schicht 2 eindeutig über seine Mediumzugangs-Identifizierungsnummer h2 bzw. MAC-ID(MT) adressiert und kennt außerdem seine eigene IP-Adresse, so dass er sie wieder in den zu rekonstruierenden IP-Kopfabschnitt hinzufügen und somit auf der physikalischen Schicht 3 eine transparente Übertragung realisieren kann (c).

Es werden also a priori Informationen aus dem Adressmanagement genutzt, um an der empfangsseitigen Konvergenzschicht den ursprünglichen IP-Kopfabschnitt einschließlich der vor der Übertragung weggelassenen Kopfabschnittsdaten h2 zu regenerieren.

Dieses Vorgehen ist möglich, wenn das IP-Paket in der teilnehmerseitigen Station MT mit unkomprimiertem Kopfabschnitt zur Konvergenzschicht durchgereicht wird und die Konvergenzschicht die Möglichkeit hat, aus dem IP-Paket selbst Informationen heraus zu holen, d.h. die Konvergenzschicht halb zur IP- und halb zur DLC-Schicht gehört. Wenn Pakete mit bereits komprimiertem IP-Kopfabschnitt durchgereicht werden, erkennt das die Konvergenzschicht vorteilhafterweise und führt optional selbst keine Komprimierung mehr durch.

Im Zug der Adressumsetzung auf die Mediumzugangs-Identifizierungsnummer MAC-ID wird die IP-Adresse noch anderweitig an die Konvergenzschicht durchgereicht oder die Konvergenzschicht veranlasst erst eine Dekomprimierung des Kopfabschnitts, was vorteilhaft, aber nicht sehr effizient ist.

Alternativ reicht die IP-Schicht das Paket an die Schicht 2 weiter und gibt gleichzeitig die Quell- und Zieladresse auf Schicht 2 bekannt, wie es bei Ethernet für sich genommen der Fall ist. D.h., die Adressierung der Zielstation MT auf Schicht 2 wird von der IP-Schicht vorgegeben. In diesem Fall wird der IP-Kopfabschnitt nicht verändert und direkt an die Zielstation MT übertragen.

Falls der IP-Kopfabschnitt für die Übertragung über die Funk-Schnittstelle V nicht verändert wurde, wird ein entsprechender Merker (Flag) nicht gesetzt, welcher für diesen Zweck in der Konvergenzschicht hinzugefügt wird. Nur wenn der Kopfabschnitt verändert wurde, die Zieladresse z.B. aus dem Kopfabschnitt entfernt wurde, wird der Merker gesetzt.

Bei einer Übertragung von Datenpaketen von der teilnehmerseitigen Station MT zum Zugangspunkt AP, wird nicht die Zieladresse sondern die Quellenadresse, also die IP-Adresse der teilnehmerseitigen Station MT aus dem Kopfabschnitt entfernt.

Die Zieladresse kann unter Umständen eine Station außerhalb des Subnetzes adressieren und wäre daher a priori nicht bekannt. Auch für diesen Fall kann ein Merker auf der Konvergenzschicht gesetzt werden, welcher anzeigt, ob die Quellenadresse entfernt wurde und somit vor der Weiterreichung an die IP-Schicht insbesondere im Zugangspunkt AP oder der externen Schnittstelle S-ext wieder hinzugefügt werden muss.

Wird eine andere Station innerhalb des Zugangs- bzw. Subnetzes RAN, insbesondere eine teilnehmerseitige Station MT3, die von demselben Zugangspunkt AP versorgt wird, von der teilnehmerseitigen Station MT adressiert, so kann die Quellenadresse vor der Übertragung auf Schicht 2 entfernt werden, wie dies Absatz zuvor beschrieben ist, es kann aber auch die Zieladresse durch die Mediumzugangs-Identifizierungsnummer MAC-ID(MT3) der Ziel-Station MT3 ersetzt werden. Dazu muss die teilnehmerseitige Station MT jedoch in Besitz der Information sein, dass sich die Zielstation MT3 in demselben Versorgungsbereich des Zugangspunkts AP befindet und deren Mediumzugangs-Identifizierungsnummer MAC-ID(MT3) kennen.

Dazu reicht z.B. die Tabelle AP-M mit IP-Adressen und zugehörigen Mediumzugangs-Identifizierungsnummern MAC-IDs aus, die an dem Zugangspunkt AP vorhanden ist. Diese könnte von dem Zugangspunkt AP an alle teilnehmerseitigen Stationen MT, MT3 verteilt werden, z.B. mit einer Rundfunknachricht (Broadcast) über einen Signalisierungskanal, sobald sich eine neue Station MT, MT3 mit einer neuen IP-Adresse bei dem Zugangspunkt AP anmeldet.

Damit das AR-Protokoll (Address Resolution Protocol) ohne wesentliche Änderungen für H/2 weiterverwendet werden kann, könnte die Mediumzugangs-Identifizierungsnummer MAC-ID, die in dem Bereich eines der Zugangspunkte AP eindeutig ist, so ergänzt werden, dass die standardmäßigen 48 Bit der IP-Schicht übergeben werden. Die freien Stellen können z.B. mit Nullen gefüllt werden. Dadurch kann einerseits die Mediumzugangs-Identifizierungsnummer MAC-ID aus der vermittelnden Schicht 2 weiterhin als solche vom ARP erkannt werden und andererseits die IP-Kopfabschnitts-Kompression auf physikalischen Schicht 3 durchgeführt werden.

Für den Fall, dass mehrere AP, AP2 von der Zugangspunkt-Steuereinrichtung APC verwaltet werden und nur die Zugangspunkt-Steuereinrichtung APC über die Schnittstelle S-ext einen Anschluss an die IP-Schicht hat, werden sämtliche Schicht 2 Adressen der teilnehmerseitigen Stationen MT, MT3 der angeschlossenen Zugangspunkte AP, AP2 der IP-Schicht bekannt gegeben. Damit die Schicht 2 Adressen weiterhin eindeutig sind, kann zusätzlich zu der Mediumzugangs-Identifizierungsnummer MAC-ID auch noch die Zugangspunkt-Identifizierungsnummer (AP-ID) des zuständigen Zugangspunkts AP, AP2 mit in die zu generierende Schicht 2 Adresse eingefügt werden, so dass eine eindeutige Zuordnung zu allen teilnehmerseitigen Stationen MT, MT3 in dem Bereich einer Zugangspunkt-Steuereinrichtung APC gegeben ist.

Insbesondere ist auch ein Anschluss an ein externes Netz IP über die Schnittstelle S-ext möglich, um Informationen aus Einrichtungen T des externen Netzes zu beschaffen oder die Daten an solche externen Stationen T zu senden. Neben der Möglichkeit, die Reduzierung des Kopfabschnittumfangs durch Austausch der Quellenadresse und der Zieladresse gegen eine im System eindeutige Mediumzugangs-Identifizierungsnummer MAC-ID (MT) in dem Zugangspunkt AP vorzunehmen, welcher mit der entsprechenden teilnehmerseitigen Station MT kommuniziert, kann die Umwandlung der Adressinformation und damit die Reduzierung des Kopfabschnittsumfangs auch in anderen netzseitigen Einrichtungen wie beispielsweise der Zugangspunkt-Steuereinrichtung APC oder der externen Schnittstelle S-ext vorgenommen werden. In einem solchen Fall müssen die entsprechenden Verbindungen zwischen diesen netzseitigen Einrichtungen entsprechend in der Lage sein, unidirektionale Datenübertragungen von Datenpaketen an Hand der eindeutigen Mediumzugangs-Indentifizierungsnummer MAC-ID durchzuführen.

## Patentansprüche

1. Verfahren zum Übertragen von Datenpaketen (IP-PDU) in einem Kommunikationssystem (H/2) auf einer Verbindung über eine Schnittstelle (V) zwischen einer senderseitigen Station (AP; AP2) und einer empfängerseitigen Station (MT, MT2; MT3), bei dem
- (a) erste Datenpakete (IP-PDU) einen Kopfabschnitt, welcher Adressenangaben (h3 bzw. h2) enthält, aufweisen und für die Übertragung über die Schnittstelle zu zweiten Datenpaketen (H/2-PDU), die einen verbindungs-spezifischen Kopfabschnitt mit einer verbindungs-abhängigen Identifizierungsinformation (h1'; MAC-ID(MT), MAC-ID(MT3)) aufweisen, umgesetzt werden, **dadurch gekennzeichnet, dass**
- (b) in der senderseitigen Station (AP; AP2) zur Kopfabschnittskomprimierung bei der Umsetzung in die zweiten Datenpakete (H/2-PDUs) die Adressenangaben (h2) zumindest teilweise weggelassen werden und
- der empfängerseitigen Station (MT, MT2; MT3) eine Information zur Verfügung gestellt wird, welche die Rekonstruktion der weggelassenen Adressenangaben ermöglicht.

2. Verfahren nach Anspruch 1, bei dem
die Adressenangaben derart an die darunterliegende Protokoll-Schicht der senderseitigen Station (AP) gereicht werden, dass eine Zuordnung zu einer eindeutigen Adresse auf dieser Schicht (H/2) durchgeführt werden kann.

3. Verfahren nach Anspruch 1 oder 2, bei dem
die weggelassenen Adressenangaben (h2) aufgrund einer verbindungsorientierten Übertragung über die Schnittstelle (V) für die Dauer der Verbindung auf eine eindeutige Mediumzugangs-Identifizierungsinformation (MAC-ID(MT), MAC-ID(MT3)) abgebildet werden.

4. Verfahren nach einem der vorstehenden Ansprüche, bei dem die weggelassenen Adressenangaben (h2) Quellen- und/oder Zieladressenangaben sind.

5. Verfahren nach einem der vorstehenden Ansprüche, bei dem netzseitig in einer Tabelle (AP-M) Adressenangaben, insbesondere Quellen- und/oder Zieladressangaben (h2, h3) zu entsprechenden eindeutigen Mediumzugangs-Identifizierungsinformationen (MAC-ID(MT), MAC-ID(MT3)) zugeordnet werden.

6. Verfahren nach einem der vorstehenden Ansprüche, bei dem teilnehmerseitig in einer Tabelle (ARP, M) Adressenangaben, insbesondere Quellen- und/oder Zieladressangaben (h2, h3) zu entsprechenden eindeutigen Mediumzugangs-Identifizierungsinformationen (MAC-ID(MT), MAC-ID(MT3)) zugeordnet werden.

7. Verfahren nach einem der vorstehenden Ansprüche, bei dem über die Schnittstelle (V) Tabelleninformationen mit verfügbaren Adressenangaben, insbesondere Quellen- und/oder Zieladressangaben (h2, h3) zwischen einer senderseitigen Tabelle (AP-M) und einer empfängerseitigen Tabelle (ARP, M) vor dem Übertragen (b) solcher netzseitigen Datenpakete (PDU) ausgetauscht werden.

8. Verfahren nach einem der Ansprüche 5 - 7, bei dem als Tabelle (AP-M; ARP, M) eine ARP-Tabelle (ARP: Address Resolution Protocol) mit zumindest bei der Station (AP, MT, MT3) bekannten IP-Adressen und/oder Ethernet-Adressen verwendet wird.

9. Verfahren, bei dem die Funktionalität zum Komprimieren des Kopfabschnitts durch ein Verfahren gemäß einem der vorstehen-den Ansprüche in einem für das Funkzugangsnetz (RAN) spezifi-schen Teil der Konvergenz-Protokollschicht angeordnet und durchgeführt wird.

10. Verfahren nach einem der vorstehenden Ansprüche, bei dem mit einem Merker im zweiten Datenpaket (H/2-PDU), insbesondere in dessen Kopfabschnitt **gekennzeichnet** wird, ob der Kopfabschnitt mit einem solchen Verfahren komprimiert wurde.

11. Verfahren nach einem der vorstehenden Ansprüche, bei dem der teilnehmerseitigen Station (MT) die Mediumzugangs-Identifizierungsinformationen (MAC-ID(MT3)) anderer im Datennetz befindlicher Stationen (MT2, MT3) von dem Netz aus (RAN, AP) mitgeteilt werden.

12. Vorrichtung zum Durchführen eines Verfahrens nach einem der vorstehenden Ansprüche mit
- einer Steuereinrichtung (C bzw. AP-C) zum Steuern des Betriebsablaufs und Übertragens von Datenpaketen und
- zumindest einer Speichereinrichtung (M bzw. AP-M) zum Speichern einer Tabelle, wobei in der Tabelle Speicherraum für Adressinformationen mit eindeutig zu Mediumzugangs-Identifizierungsinformationen (MAC-ID(MT), MAC-ID(MT3)) zugeordneten Quellen- und/oder Zieladressangaben bereitgestellt ist.

13. Kommunikationssystem, insbesondere gemäß HiperLAN/2, zum Durchführen eines Verfahrens nach einem der Ansprüche 1 - 11 und insbesondere mit Vorrichtungen nach Anspruch 12, wobei die netzseitige Übertragung von Datenpaketen (PDUs) in netzseitigen und teilnehmerseitigen Stationen (AP bzw. MT) zumindest in Teilen des Kommunikationssystems mit Datenpaket-Kopfabschnitten gemäß dem Internetprotokoll und zumindest auf der Schnittstelle (V) mit einer Mediumzugriffs-Identifizierungsinformation (MAC-ID) als eindeutiger Adressangabe durchgeführt wird.
